# EUROPEAN PATENT APPLICATION

(11) **EP 2 081 138 A1**
(43) Date of publication of application: **22.07.2009**
(21) Application number: 08021982.7
(22) Date of filing: 18.12.2008
(51) Int. Cl.: G06Q 10/00

(54) **Apparatus and method for transmitting work information, and method for providing work information**

(30) Priority: 15.01.2008 KR 20080004567
(71) Applicant: Samsung Electronics Co., Ltd., Suwon-si, Gyeonggi-do 442-742 (KR)
(72) Inventor: Kim, Myung-Kook, Seoul (KR); Park, In-Soo, Anyang-si Gyeonggi-do (KR); Lee, Chung-Yeol, Cheonan-si Chungcheongnam-do (KR); Park, Il-Gee, Cheonan-si Chungcheongnam-do (KR)
(74) Representative: Weitzel, Wolfgang

(57) **Abstract**

A work information transmitting apparatus of a primary business enterprise provides second work information to a second server of a secondary business enterprise according to first work information received from a first server of a main business enterprise. The first work information includes production plan information generated based on inventory information regarding materials of the primary business enterprise and/or secondary business enterprise, and information about first materials required by the main business enterprise. The first server transmits second work information including information about second materials among the first materials and delivery time limit information regarding the second materials to the second server, receives response information with respect to the second work information from the second server, and transmits the corresponding results to the first server. The second materials are materials that are to be requested from the secondary business enterprise.

## Description

### BACKGROUND OF THE INVENTION

### FIELD OF THE INVENTION

The present invention relates to an apparatus and a method for transmitting work information, and to a method for providing work information.

### DISCUSSION OF THE BACKGROUND

A recent tendency has been that when a main business enterprise requests required materials (resources) from a primary business enterprise, the primary business enterprise requests some of the materials from a secondary business enterprise. For this, the main business enterprise transfers work information such as production plan information, information about required materials, etc., to the primary business enterprise, and the primary business enterprise supplies materials to the main business enterprise according to the work information.

In a system for transferring such work information via a network that is installed between a main business enterprise and a primary business enterprise, the primary business enterprise may receive work information from the main business enterprise through the system according to rules or schedules.

However, work information may not be transferred via such a system between the primary business enterprise and the secondary business enterprise, but rather, may be transferred via a telephone or a facsimile. Thus, the work information may not be regularly or clearly transferred from the primary business enterprise to the secondary business enterprise, which may cause a problem in that the secondary business enterprise may not accurately supply materials to the primary business enterprise.

### SUMMARY OF THE INVENTION

The present invention provides an apparatus and a method for allowing a main business enterprise, a primary business enterprise, and a secondary business enterprise to accurately transmit work information to each other.

Additional features of the invention will be set forth in the description which follows, and in part will be apparent from the description, or may be learned by practice of the invention.

The present invention discloses an apparatus for transmitting work information of a first business enterprise. The apparatus includes a receiver, a classifier, a scheduler, and a transmitter. The receiver receives first work information including information about first materials required by a second business enterprise from a first server of the second business enterprise, and the classifier classifies second materials among the first materials and generates information about the second materials. The second materials are materials that are to be requested from a third business enterprise. The scheduler generates delivery time limit information of the second materials, and the transmitter transmits second work information including the information about the second materials and the delivery time limit information of the second materials to a second server of the third business enterprise.

The present invention also discloses a work information transmitting method of a work information transmitting apparatus of a first business enterprise. The work information transmitting method includes receiving first work information including information about first materials required by a second business enterprise from a first server of the second business enterprise, transmitting second work information including information about second materials among the first materials and delivery time limit information of the second materials to a second server of a third business enterprise, receiving response information with respect to the second work information from the second server, and transmitting a result according to the response information to the first server. The second materials are materials that are to be requested from the third business enterprise

The present invention also discloses a work information providing method of a first server of a first business enterprise via a second server of a second business enterprise in a work information providing apparatus of a third business enterprise. The work information providing method includes receiving first status information including inventory information regarding materials of the first business enterprise transmitted via the second server from the first server, generating first work information including production plan information generated based on the first status information and information about materials according to the production plan information, and transmitting the first work information to the second server so that the second server can transmit second work information corresponding to the first work information to the first server.

The present invention also discloses a recording medium having a program stored thereon to execute a work information transmitting method in a work information transmitting apparatus of a first business enterprise. The work information transmitting method includes receiving first work information including information about first materials required by a second business enterprise from a first server of the second business enterprise, transmitting second work information including information about second materials among the first materials and delivery time limit information of the second materials to a second server of a third business enterprise, receiving response information with respect to the second work information from the second server; and transmitting a result according to the response information to the first server. The second materials are materials that are to be requested from the third business enterprise.

The present invention provides a recording medium having a program recorded thereon to execute a work information providing method to a first server of a first business enterprise via a second server of a second business enterprise in a work information providing apparatus of a third business enterprise. The work information providing method includes receiving first status information including inventory information regarding materials of the first business enterprise transmitted via the second server from the first server, generating first work information including production plan information generated based on the first status information and information about materials according to the production plan information, and transmitting the first work information to the second server so that the second server can transmit second work information corresponding to the first work information to the first server.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic diagram of a work information transmitting system according to an exemplary embodiment of the present invention.

FIG. 2 is a schematic block diagram of a work information transmitting apparatus according to an exemplary embodiment of the present invention.

FIG. 3 is a flowchart of a work information transmitting method according to an exemplary embodiment of the present invention.

FIG. 4 and FIG. 5 are diagrams respectively showing a scheduling method in a work information transmitting method according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

Throughout the specification, each block may refer to a unit that processes at least one function or operation, and it can be implemented as hardware, software, or a combination of hardware and software.

The apparatus and method for transmitting work information, and a method for providing work information according to an exemplary embodiment of the present invention will now be described in detail.

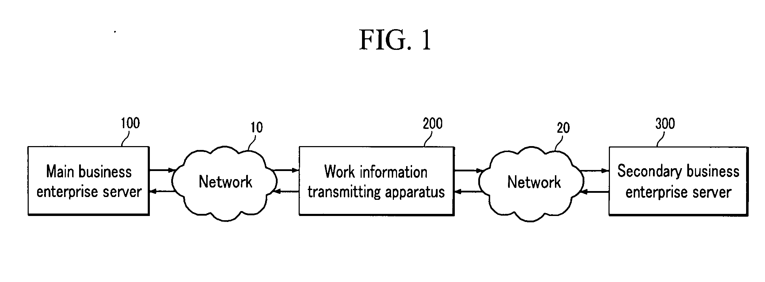

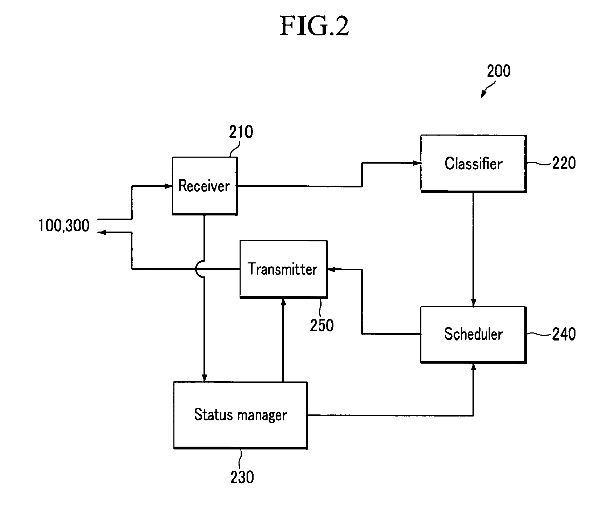

FIG. 1 is a schematic diagram of a work information transmitting system according to an exemplary embodiment of the present invention, and FIG. 2 is a schematic block diagram of a work information transmitting apparatus according to an exemplary embodiment of the present invention.

As shown in FIG. 1, the work information transmitting system includes a main business enterprise server 100, a work information transmitting apparatus 200 of a primary business enterprise, and a secondary business enterprise server 300. The main business enterprise server 100 and the work information transmitting apparatus 200 are connected via a network 10, and the work information transmitting apparatus 200 and the secondary business enterprise server 300 are connected via a network 20. As the networks 10 and 20, wired or wireless Internet may be used.

The main business enterprise server 100 transmits work information about required materials to be supplied from the primary business enterprise to the work information transmitting apparatus 200, and the main business enterprise server 100 includes a work information providing apparatus (not shown) to generate such work information. The work information includes production plan information, and the names of goods and the volume thereof. The work information transmitting apparatus 200 classifies materials to be provided to the main business enterprise by itself and materials to be requested from the secondary business enterprise according to the work information that has been received from the main business enterprise server 100, and generates work information about the materials to be requested from the secondary business enterprise according to the production plan information that has been received from the main business enterprise server 100. The work information transmitting apparatus 200 provides the work information about materials to be requested from the secondary business enterprise to the secondary business enterprise server 300. Then, the secondary business enterprise server 300 transfers response information as to whether the materials requested by the work information transmitting apparatus 200 can be supplied according to the work information to the work information transmitting apparatus 200, and the work information transmitting apparatus 200 provides results according to the received response information to the main business enterprise server 100.

With reference to FIG. 2, the work information transmitting apparatus 200 according to an exemplary embodiment of the present invention may include a receiver 210, a classifier 220, a status manager 230, a scheduler 240, and a transmitter 250.

The receiver 210 receives work information from the main business enterprise server 100, and the transmitter 250 transmits the results according to the response information from the secondary business enterprise server 300 to the main business enterprise server 100. The classifier 220 classifies materials to be requested from the secondary business enterprise on the basis of the work information that has been received from the main business enterprise server 100. The status manager 230 manages status information regarding the status of current materials of the secondary business enterprise provided from the secondary business enterprise server 300, and the status of distribution equipment to supply the materials etc., and also manages status information regarding materials and distribution equipment of the primary business enterprise itself. The main business enterprise server 100 devises a production plan based on the status information of the primary and secondary business enterprises transferred from the status manager 230 via the transmitter 250, and generates work information according to the devised production plan. The scheduler 230 generates work information about materials to be requested from the secondary business enterprise server 300 based on the status information of the secondary business enterprise and the work information that has been received from the main business enterprise server 100, and manages a schedule of the time limit for delivery. In this case, the scheduler 230 may manage the schedule of delivery time limit according to long period units (e.g., weeks or months) or short period units (e.g., days), or may manage the schedule of delivery time limit according to both long period units and short period units.

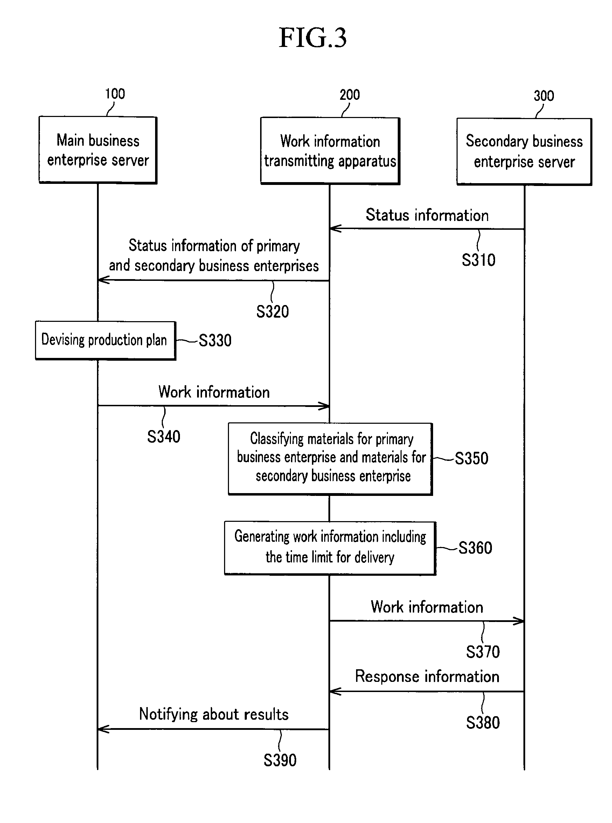

The work information transmitting method of the work information transmitting apparatus according to an exemplary embodiment of the present invention will now be described in detail with reference to FIG. 3, FIG. 4, and FIG. 5.

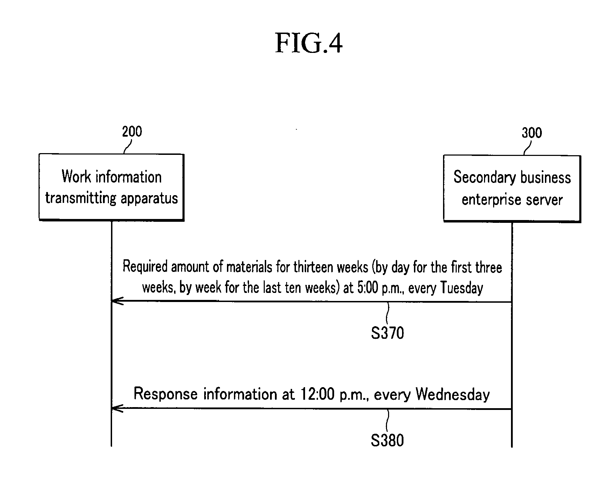

FIG. 3 is a flowchart of a work information transmitting method according to an exemplary embodiment of the present invention, and FIG. 4 is a diagram showing a scheduling method of a work information transmitting method according to one exemplary embodiment of the present invention.

With reference to FIG. 3, the status manager 230 of the work information transmitting apparatus 200 receives status information from the secondary business enterprise server 300 via the receiver 210 (S310). Here, the status information includes material information and/or status information of distribution equipment of the secondary business enterprise. The material information may include finished product inventory information, inventory information by parts, and mold (die) information. The mold information may include the number of molds, the volume of inventories of the molds, status information of the molds, and a production period of the molds. The status information of the distribution equipment may include the present status of maintenance of distribution equipment, the present status of movement of distribution equipment, and a turnover ratio of distribution equipment. The material information, the mold information, and the distribution equipment information may include only some of the corresponding information according to a state of the secondary business enterprise. The status manager 230 also manages status information about materials supplied to the main business enterprise by the primary business enterprise not by way of the secondary business enterprise, and distribution equipment to supply the materials. The status manager 230 transfers the status information of the secondary business enterprise and its status information, namely, the status information of the primary business enterprise, to the main business enterprise server 100 via the transmitter 250 (S320).

The main business enterprise server 100 devises a production plan on the basis of the status information of the primary and secondary business enterprises (S330), generates work information according to the devised production plan, and transfers the generated work information to the work information transmitting apparatus 200 (S340). By doing that, the main business enterprise server 100 can devise the production plan with reference to the material status and/or the distribution equipment status of the primary and secondary business enterprises, and thus the occurrence of failures in the production plan may be prevented.

The classifier 220 classifies materials to be directly supplied by the primary business enterprise and materials to be requested from the secondary business enterprise with reference to the work information received from the main business enterprise 100 (S350). The scheduler 240 generates work information including the materials to be requested from the secondary business enterprise and corresponding delivery time limit information based on the production plan information included in the work information received from the main business enterprise server 100 (S360). The transmitter 250 transfers the work information generated by the scheduler 240 to the secondary business enterprise server 300 (S370).

When the scheduler 240 generates the work information, it may generate the delivery time limit information for a long term period based on the production plan information provided from the main business enterprise server 100 and transmit the generated information to the secondary business enterprise server 300 at certain intervals of a period. In this case, the delivery time limit information for a long term period may include information about a required amount of materials for each short period unit of a first period of the long term period and information about a required amount of materials for each long period unit of a next period of the long term period. For example, as shown in FIG. 4, the scheduler 240 may generate delivery time limit information for a period of thirteen weeks and transmit the information to the secondary business enterprise server 300 at 5:00 p.m. on every Tuesday (S370). In detail, the delivery time limit information of the period of thirteen weeks may include information about a required amount of materials for each day over the first three weeks and information about a required amount of materials for each week over the next ten weeks. Accordingly, the secondary business enterprise may accurately recognize the long-term required amount of materials and the short-term required amount of materials and devise a plan based thereon. For this purpose, when the work information providing apparatus of the main business enterprise server 100 devises the production plan in consideration of the status information of the primary and secondary business enterprises, it may provide information about an overall long-term required amount of materials, which includes information about a required amount of materials in units of short terms and information about a required amount of materials in units of long terms, to the work information transmitting apparatus 200.

In response to the work information in step S370, the secondary business enterprise server 300 transmits response information indicating whether or not the requested materials can be supplied within a certain time after the work information is received (S380). For example, as shown in FIG. 4, the work information transmitting apparatus 200 and the secondary business enterprise server 300 may transmit the response information with respect to the work information at 12:00 p.m. on every Wednesday. In this manner, the work information transmitting apparatus 200 can check whether the secondary business enterprise can supply the requested materials within a specific time and fulfill the plan of supplying materials to the main business enterprise.

The receiver 210 of the work information transmitting apparatus 200 receives the response information that has been received from the secondary business enterprise server 300, and the transmitter 250 transmits results according to the response information to the main business enterprise server 100 (S390). Then, the main business enterprise server 100 can accurately recognize whether or not the second business enterprise can supply the materials without fail, thus reducing the possibility that the production plan goes awry.

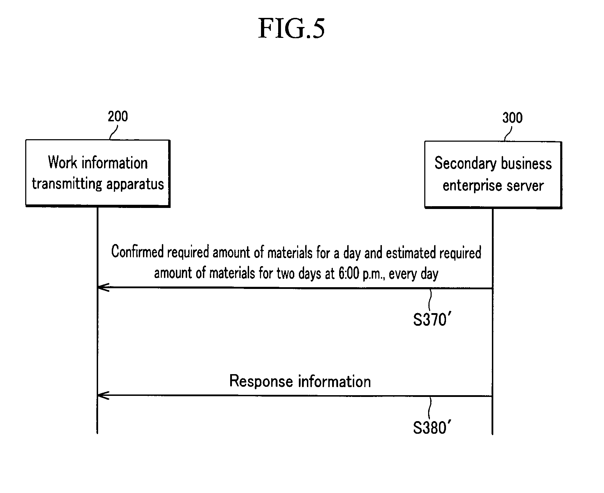

FIG. 5 is a diagram showing a scheduling method of a work information transmitting method according to another exemplary embodiment of the present invention.

According to another exemplary embodiment of the present invention, when the scheduler 240 generates work information, it may generate delivery time limit information in short term units based on the production plan information provided from the main business enterprise server 100 and transmit the delivery time limit information to the secondary business enterprise server 300 at certain intervals of a period. In this case, the delivery time limit information of short term units may include information about a confirmed required amount of materials during a first certain period of a corresponding term and information about an estimated required amount of materials during the next certain period of the corresponding term. For example, as shown in FIG. 5, the scheduler 240 may generate delivery time limit information for a period of three days and transmit the generated information to the secondary business enterprise server 300 at 6:00 p.m. every day (S370'). In detail, the delivery time limit information of the period of three days includes information about a confirmed required amount of materials during the first day and information about an estimated required amount of materials during the next two days. In other words, the delivery time limit information transmitted at 6:00 p.m. on October 16^{th}, to the secondary business enterprise server 300 includes a confirmed required amount of materials for the day of October 18^{th} and an estimated required amount of materials for the two days of October 19^{th} and October 20^{th}. For this, when the work information providing apparatus of the main business enterprise server 100 devises the production plan in consideration of the primary and secondary business enterprises, it may provide the information about a required amount of materials of a short term, which includes information about a confirmed required amount of materials during a first certain period and information about an estimated required amount of materials during the next certain period, to the work information transmitting apparatus 200.

Then, in response to the work information in step S370', the secondary business enterprise server 300 transmits response information indicating whether or not the requested materials can be supplied within a certain time after the work information is received (5380'). Accordingly, the work information transmitting apparatus 200 can check whether or not the secondary business enterprise can supply the requested materials within a determined time, and fulfill the plan of supplying materials to the main business enterprise.

Work information may transmitted in long period units or in short period units, or alternatively, the work information transmitting apparatus may transmit work information over both short period units and long period units. In detail, as shown in FIG. 4, the work information transmitting apparatus may transmit a required amount of materials for a period of three days at 6:00 p.m. on each day, while it transmits an estimated required amount of materials by day during the first three weeks and an estimated required amount of materials by week during the next ten weeks at 5:00 p.m. on every Tuesday. In this case, a proper place to supply materials and an exact supply time may be included only in the work information of the short term.

In this manner, the secondary business enterprise may estimate the required amount of materials by the long term and manage the inventory of the materials and the distribution equipment status, and supply the materials to a proper place at an exact time.

As described above, according to the exemplary embodiments of the present invention, the secondary business enterprise may precisely recognize the required amount of materials as requested and devise a corresponding plan, to thus reduce the possibility that the production plan of the main business enterprise goes awry. In addition, because the main business enterprise devises its production plan according to the status of the primary and/or secondary business enterprises, its production plan may be fulfilled without fail.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A work information transmitting apparatus of a first business enterprise, comprising:
a receiver to receive first work information from a first server of a second business enterprise, the first work information comprising information about first materials required by the second business enterprise;
a classifier to classify second materials among the first materials and generate information about the second materials, the second materials being materials that are to be requested from a third business enterprise;
a scheduler to generate delivery time limit information of the second materials; and
a transmitter to transmit second work information to a second server of the third business enterprise, the second work information comprising the information about the second materials and the delivery time limit information of the second materials.

2. The apparatus of claim 1, wherein the classifier provides the information about the second materials to the scheduler.

3. The apparatus of claim 2, wherein the scheduler generates the second work information comprising the information about the second materials and the delivery time limit information of the second materials, and transmits the second work information to the transmitter.

4. The apparatus of claim 1, wherein the first work information further comprises production plan information of the second business enterprise, and the delivery time limit information is generated based on the production plan information.

5. The apparatus of claim 1, further comprising:
a status manager to receive first status information of the third business enterprise from the second server, and transmit the first status information to the first server via the transmitter,
wherein the first status information comprises inventory information of the second materials, and the production plan information is provided based on the first status information.

6. The apparatus of claim 5, wherein the first status information further comprises status information of distribution equipment to supply the second materials.

7. The apparatus of claim 5, wherein the status manager transmits second status information to the first server via the transmitter, the second status information comprising inventory information of third materials among the first materials, the third materials being materials that are supplied by the first business enterprise, and
the production plan information is provided based on the first status information and the second status information.

8. The apparatus of claim 1, wherein the scheduler provides the delivery time limit information to the transmitter at intervals of a period.

9. The apparatus of claim 8, wherein the period comprises a first period and a second period subsequent to the first period, and
the delivery time limit information comprises information about a required amount of materials of a third period unit during the first period and information about a required amount of materials of a fourth period unit during the second period.

10. The apparatus of claim 9, wherein the third period unit is a day, the fourth period unit is a week, the first period includes a plurality of days, and the second period includes a plurality of weeks.

11. The apparatus of claim 8, wherein the period comprises a first period and a second period subsequent to the first period, and
the delivery time limit information comprises information about a required amount of materials that is decided for the first period and information about a required amount of materials that is estimated for the second period.

12. The apparatus of claim 11, wherein the first period includes a day, and the second period includes a plurality of days.

13. The apparatus of claim 1, wherein the delivery time limit information comprises first delivery time limit information of a first period and second delivery time limit information of a second period that is shorter than the first period, and
the scheduler generates the first delivery time limit information and transmits the first delivery time limit information to the transmitter at intervals of a third period, and generates the second delivery time limit information and transmits the second delivery time limit information to the transmitter at intervals of a fourth period that is shorter than the third period.

14. The apparatus of claim 13, wherein the first period comprises a fifth period and a sixth period subsequent to the fifth period, and the second period comprises a seventh period and an eighth period subsequent to the seventh period,
wherein the first delivery time limit information comprises information about a required amount of materials of a ninth period during the fifth period and information about a required amount of materials of a tenth period during the sixth period of the first period, and
the second delivery time limit information comprises information about a required amount of materials that is decided for seventh period and information about a required amount of materials that is estimated for the eighth period.

15. The apparatus of claim 1, wherein the receiver receives response information about whether or not the second materials can be supplied according to the second work information from the second server, and
the transmitter transmits a result according to the response information to the first server.

16. A method of transmitting work information in a work information transmitting apparatus of a first business enterprise, the method comprising:
receiving first work information comprising information about first materials required by a second business enterprise from a first server of the second business enterprise;
transmitting second work information to a second server of a third business enterprise, the second work information comprising information about second materials among the first materials and delivery time limit information of the second materials, the second materials being materials that are to be requested from the third business enterprise;
receiving response information regarding the second work information from the second server; and
transmitting a result according to the response information to the first server.

17. The method of claim 16, further comprising:
receiving inventory information about materials of the third business enterprise from the second server; and
transmitting status information to the first server, the status information comprising inventory information about materials of the third business enterprise and inventory information about materials of the first business enterprise.

18. The method of claim 17, further comprising:
receiving production plan information, which is generated based on the status information, from the first server,
wherein the delivery time limit information is generated based on the production plan information.

19. The method of claim 16, wherein the delivery time limit information comprises first delivery time limit information of a first period and second delivery time limit information of a second period that is shorter than the first period, and
wherein transmitting of the second work information to the second server comprises:
transmitting the second work information comprising the first delivery time limit information to the second server at intervals of a third period; and
transmitting the second work information comprising the second delivery time limit information to the second server at intervals of a fourth period that is shorter than the third period.

20. The method of claim 19, wherein the first period comprises a fifth period and a sixth period subsequent to the fifth period, and the second period comprises a seventh period and an eighth period subsequent to the seventh period,
wherein the first delivery time limit information comprises information about a required amount of materials of a ninth period during the fifth period and information about a required amount of materials of a tenth period during the sixth period of the first period, and
the second delivery time limit information comprises information about a required amount of materials that is decided for seventh period and information about a required amount of materials that is estimated for the eighth period.

21. A method of providing work information to a first server of a first business enterprise via a second server of a second business enterprise in a work information providing apparatus of a third business enterprise, the method comprising:
receiving first status information comprising inventory information regarding materials of the first business enterprise transmitted via the second server from the first server;
generating first work information comprising production plan information that is generated based on the first status information and information about materials according to the production plan information; and
transmitting the first work information to the second server so that the second server can transmit second work information corresponding to the first work information to the first server.

22. The method of claim 21, further comprising:
receiving second status information comprising inventory information regarding materials of the second business enterprise from the second server,
wherein the production plan information is generated based on the first status information and the second status information.

23. The method of claim 21, wherein the second work information comprises:
delivery time limit information of materials to be requested from the first business enterprise.

24. The method of claim 23, further comprising:
receiving a result according to response information of the delivery time limit information from the second server,
wherein the response information is provided by the first server to the second server.

25. A recording medium having a program stored thereon to execute a work information transmitting method in a work information transmitting apparatus of a first business enterprise, the work information transmitting method comprises:
receiving first work information comprising information about first materials required by a second business enterprise from a first server of the second business enterprise;
transmitting second work information to a second server of a third business enterprise, the second work information comprising information about second materials among the first materials and delivery time limit information of the second materials, the second materials being materials that are to be requested from the third business enterprise;
receiving response information with respect to the second work information from the second server; and
transmitting a result according to the response information to the first server.

26. A recording medium having a program recorded thereon to execute a method for providing work information to a first server of a first business enterprise via a second server of a second business enterprise in a work information providing apparatus of a third business enterprise, the method comprising:
receiving first status information comprising inventory information regarding materials of the first business enterprise transmitted via the second server from the first server;
generating first work information including production plan information that is generated based on the first status information and information about materials according to the production plan information; and
transmitting the first work information to the second server so that the second server can transmit second work information corresponding to the first work information to the first server
